(19) Europäisches Patentamt
European Patent Office
Office européen des brevets

(11) **EP 4 123 272 A1**

(12) **EUROPEAN PATENT APPLICATION**

(43) Date of publication:
**25.01.2023 Bulletin 2023/04**

(21) Application number: **21186382.4**

(22) Date of filing: **19.07.2021**

(51) International Patent Classification (IPC):
**G01J 3/433** (2006.01)          **G01J 3/10** (2006.01)

(52) Cooperative Patent Classification (CPC):
**G01J 3/433; G01J 3/10**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **EMPA Eidgenössische Material Prüfungs- und Forschungsanstalt**
  **8600 Dübendorf Zürich (CH)**
- **ETH Zürich**
  **8092 Zürich (CH)**

(72) Inventors:
- **Gianella, Michele**
  **8600 Dübendorf (CH)**
- **Vogel, Simon**
  **8500 Frauenfeld (CH)**
- **Emmenegger, Lukas**
  **8600 Dübendorf (CH)**
- **Faist, Jérôme**
  **8093 Zürich (CH)**

(74) Representative: **Keilitz Haines & Partner Patentanwälte PartGmbB**
**Nigerstraße 4**
**81675 München (DE)**

(54) **FREQUENCY SHIFT MEASUREMENT OF FREQUENCY COMBS**

(57) A frequency-comb spectrometer is supplemented with an unbalanced interference device 1 which receives a portion of the comb beam, splits it into two portions and recombines them after delaying one longer than the other through an optical path difference ΔL that is set to fulfil a matching condition which ensures that the contributions arising from the individual comb lines are all in-phase and so produce a detectable amplitude variation in the recombined beam when the frequency of the comb shifts. This amplitude variation is collected as an interference signal concurrently with collecting the usual spectral data signal and is used to compute the time-varying frequency shift of the comb, thereby allowing the frequency axis of the sample spectrum to be calibrated.

$$\Delta L = L_2 - L_1$$
$$\Delta \tau = \tau_2 - \tau_1$$

FIG. 5

**Description**

**BACKGROUND OF THE INVENTION**

The invention relates generally to frequency combs and more specifically on how to measure the frequency shift of a frequency comb that varies with time.

In frequency-comb spectroscopy, a frequency comb source (interrogator comb) is used to probe a sample. The wavelength-dependent attenuation and dispersion of the sample attenuate and phase-shift, respectively, the various comb teeth; the comb tooth at frequency $v$ is attenuated by the sample's attenuation at that frequency, and phase-shifted by the sample's dispersion at that frequency. To determine to comb-tooth-specific attenuation or dispersion, the magnitude and phase of each comb line transmitted through the sample must be measured. Furthermore, it should be possible to link these measurements - which normally appear on the $y$ axis of the "spectrum" - to the optical frequency of the corresponding comb line, which appears on the x axis. One technique enabling comb-tooth-specific measurements is dual-comb spectroscopy.

In dual-comb spectroscopy, the interrogator comb is supplemented by a local oscillator comb. The two combs have slightly different comb spacing, so that when their respective light beams are both incident on the same detector, the comb lines produce an interferogram. To perform dual-comb spectroscopy on a sample, the comb light beam from the interrogator is used to probe the sample, while the comb light beam from the other laser is used as a local oscillator. The interferogram contains optical information about the sample. Attenuation and dispersion information of the sample is encoded in the detector signal respectively as magnitude and phase in a large number of evenly spaced narrow-band components called beat notes. The signal collected by the detector is referred to as a multi-heterodyne beat note signal (MHBNS). Each beat note is a sinusoidal modulation of the detector's photocurrent (or voltage) with a unique frequency. Multiple (usually hundreds) of beat notes are present simultaneously, and because their frequencies are all different, their amplitudes (magnitude and phase) can be measured independently. Each beat note gives information about the attenuation and dispersion of the sample at a specific optical frequency. There is therefore a map that links each beat note at any given time to the corresponding optical frequency for that beat note and that time:

$$(n, t) \rightarrow v(n, t)$$

where $n$ is the beat note index, $t$ is the time, and $v$ is the optical frequency of the corresponding comb line. The optical information is extracted with a discrete Fourier transform (DFT).

US 2017/201328 A1 discloses a dual-comb spectrometer based on two free-running quantum cascade lasers (QCLs). As is well known, QCLs have a relatively large free spectral range (FSR), e.g. typically 5-15 GHz, which results in a relatively large spacing between the spectral points. In operation, one set of $N_n$ data points is acquired while the outputs of the two QCLs are fixed, where $N_n$ is the number of measured beat notes. These data points are the $N_n$ beat note amplitudes that contain the information about the sample at the respective optical frequencies: the amplitude of beat note $n$ contains the information about the sample at the optical frequency $v(n, t_0)$, where $t_0$ is the current time instant. After acquiring this set of data points, the interrogator QCL is tuned by a small amount to move to the next set of data points. The shift of the interrogator comb can be measured directly from the shift of the beat note frequencies (the two are identical). Before the next dataset is acquired, the local oscillator comb is usually stepped too: this is done to bring the beat note frequencies back into the "centre" of the detection bandwidth. Otherwise, repeated stepping of the interrogating comb would shift the beat notes outside of the detection bandwidth. At time $t_0 + \Delta t$, data is then collected for the next set of data points while both lasers are fixed: now the amplitude of beat note $n$ contains information about the sample at the optical frequency $v(n, t_0 + \Delta t)$. The data points are thus collected by stepping the interrogator and local oscillator QCL *asynchronously* and acquiring $N_n$ data points for each "offset" of the interrogator QCL.

The acquisition method of US 2017/201328 A1 can become extremely time consuming if the steps are made very small, for example small enough to detect Doppler-broadened transitions, since the acquisition method is based on repeated, asynchronous stepping and measuring.

US 2021/063306 A1 uses a different acquisition method to avoid this problem. Instead of an asynchronous step-and-measure approach, both QCL lasers are continuously tuned with synchronized drive signals (e.g. laser current modulation) that follow a coordinated pair of functional forms to acquire a full dataset. The continuous sweeping provides finely spectrally interleaved data points with spectral point spacing reduced by several orders of magnitude compared with the FSR of the QCL sources, e.g. from 5-15 GHz to 1-300 MHz. Data acquisition with the sweep-and-interleave method is typically achieved in 10 - 100 ms compared with hours for the asynchronous step-and-measure method. However, with the sweep-and-interleave method, the frequency axis in the acquired spectrum is not precisely calibrated. This can be understood by considering the frequency components of the swept frequency comb, which are:

$$v_n(t) = v_{\text{ofs}}(t) + n \cdot f_{\text{rep}}$$

where

> $v_n(t)$ is the frequency of the n-th comb line at time $t$
> $v_{\text{0fs}}(t)$ is the comb offset frequency at time $t$, and corresponds to the frequency of the comb line that is (arbitrarily) indexed as 0
> $f_{\text{rep}}$ is the repetition frequency

We define

$$v_{\text{ofs}}(t) = v_{\text{ofs}}(0) + \delta v_{\text{ofs}}(t)$$

where $\delta v_{\text{ofs}}(t)$ is the shift of the comb since $t = 0$.

With the sweep-and-interleave acquisition method, the offset frequency $v_{\text{ofs}}$ is a function of time, since it is continuously tuned during acquisition of all the sets of data points, whereas with the step-and-measure acquisition the offset frequency is fixed during the time when each set of data points is acquired and only changed in between sets of data points when the comb is adjusted by the "step".

M. Gianella et al., "High-resolution and gapless dual comb spectroscopy with current-tuned quantum cascade lasers" Opt. Express 28, 6197-6208 (2020) discloses a way to accurately calibrate the frequency axis with data acquired from a sweep-and-interleave acquisition method. A reference cell containing a reference gas is used, gases generally having very narrow absorption lines of known frequencies. The acquisition follows the sweep-and-interleave method of US 2021/063306 A1 with the acquired spectrum being overlaid with peaks from the reference gas. Methane gas provided a suitably large number (~25) of absorption lines across the spectral range of interest (~1175 to 1225 cm$^{-1}$), thereby providing frequency markers that allow the signal from the sample to be mapped onto a frequency axis.

## SUMMARY OF THE INVENTION

According to one aspect of the invention there is provided a comb source apparatus comprising:

> a comb source operable to output a light beam containing a frequency comb consisting of a finite series of comb lines separated by a repetition frequency $f_{\text{rep}}$;
> an unbalanced interference device configured to receive a portion of the light beam, split that portion of the light beam into first and second components and then recombine the first and second components after the first component has traversed a first optical path length and the second component has traversed a second optical path length that is longer than the first optical path length by an optical path length difference, thereby to output a recombined beam portion; and
> a frequency offset detector arranged to receive the recombined beam portion and operable to output a frequency offset measurement signal, which is amplitude modulated such that a frequency change, $\delta v_{\text{ofs}}$, of the frequency comb by an amount

$$\delta v_{\text{ofs}} = \frac{c}{\Delta L \cdot \mu}$$

causes the amplitude of the frequency offset measurement signal to be modulated by one cycle, where

> $\Delta L$ is the optical path length difference,
> $c$ is the speed of light, and
> $\mu$ is the refractive index of the medium traversed by the first and second components.

The unbalanced interference device is used to analyse a portion of the light beam output by a comb source to track any frequency shift of the comb as a function of time. The unbalanced interference device is configured in use to fulfil a matching condition - at least approximately. The matching condition is such that that the optical path length

difference $\Delta L$ is set to a value that at least approximately equals $q \cdot c/(f_{rep} \cdot \mu)$, where $c$ is the speed of light, $q$ is an integer, $\mu$ is the refractive index of the medium traversed by the first and second components in the unbalanced interference device, and $f_{rep}$ is the repetition frequency of the frequency comb.

When the frequency of the comb shifts, this causes an amplitude variation in the recombined beam as a result of the varying interference between the first and second beam components. This amplitude variation is detected by the frequency offset detector as an interference signal. Every full cycle of the amplitude corresponds to a frequency change of $c/(\mu \Delta L)$. Counting the cycles can therefore track the size of the frequency shift. Since the optical path difference is inversely proportional to the frequency separation between cycles, it can be set to a value to provide the desired coverage of whatever frequency range needs to be tracked. If small frequency changes need to be resolved, then the optical path difference is made larger. With a precisely constant rate of change of the comb frequency, the amplitude variation is precisely periodic with a period, $v_{period} = c/(\mu \Delta L)$.

A practical way to configure the unbalanced interference device so that the matching condition is fulfilled is to set the optical path length difference to a value that provides an observable amplitude modulation of the frequency offset measurement signal throughout whatever frequency range the frequency needs to be tracked over, e.g. a frequency tuning range of an interrogator comb in a sweep-and-interleave acquisition in a dual-comb spectrometer. As long as the amplitude modulation is large enough to be easily observable, then it does not matter whether the matching condition is precisely met, i.e. it is not necessary to maximize the amplitude modulation, just to be near enough to the maximum that there is plenty of signal for detection.

In certain embodiments, the unbalanced interference device is configured to allow at least one of the first and second optical path lengths to be adjusted, thereby to adjust the optical path length difference. The optical path length difference can be adjusted prior to performing an experiment in a pre-calibration process.

The unbalanced interference device can be selected from the group: an interferometer; a Fabry-Perot etalon; and an optical resonator. If the unbalanced interference device is an interferometer, then the first and second components will be associated with first and second arms of the interferometer, in which case a convenient arrangement is to provide a positioner to provide for adjustment of the optical path length of the longer, second arm while the optical path length of the shorter, first arm is fixed.

The comb source apparatus may further comprise a data logger arranged to collect the frequency offset measurement signal; a data processor operable to process the frequency offset measurement signal to track frequency changes of the frequency comb as a function of time through analysing the cycles in the frequency offset measurement signal; and/or a controller configured to apply a control signal to the comb source, wherein varying magnitude of the control signal causes the frequency comb to move in frequency.

The above-described comb source apparatus with a comb source and an unbalanced interference device may be useful not only in dual-comb spectroscopy but also in applications which use different detection schemes to measure the comb-teeth amplitudes, such as spectrometers employing virtually-imaged phased array (VIPA).

According to a further aspect of the invention there is provided a method of operating a comb source apparatus comprising:

> outputting with a comb source a light beam containing a frequency comb consisting of a finite series of comb lines separated by a repetition frequency $f_{rep}$; and
>
> measuring with a frequency offset detector a frequency offset measurement signal derived from a portion of the light beam which has been overlapped with a delayed version of itself by splitting that portion of the light beam into first and second components and then recombining the first and second components after the first component has traversed a first optical path length and the second component has traversed a second optical path length that is longer than the first optical path length by an optical path length difference, wherein the frequency offset measurement signal is amplitude modulated such that a frequency change, $\delta v_{ofs}$, of the frequency comb by an amount

$$\delta v_{ofs} = \frac{c}{\Delta L \cdot \mu}$$

> causes the amplitude of the frequency offset measurement signal to be modulated by one cycle, where

>> $\Delta L$ is the optical path length difference,
>> $c$ is the speed of light, and
>> $\mu$ is the refractive index of the medium traversed by the first and second components.

In some embodiments, the method further comprises: adjusting the optical path length difference $\Delta L$ to a value at least approximately equal to $q \cdot c/(f_{rep} \cdot \mu)$, where c is the speed of light, $q$ is an integer, $\mu$ is the refractive index of the medium that the first and second components traverse, and $f_{rep}$ is the repetition frequency of the frequency comb.

In some embodiments, the method further comprises: adjusting the optical path length difference to a value that provides an observable amplitude modulation of the frequency offset measurement signal over a defined frequency range.

According to a further aspect of the invention there is provided a method of computer processing data obtained from a comb source apparatus comprising:

a comb source operable to output a light beam containing a frequency comb consisting of a finite series of comb lines separated by a repetition frequency $f_{rep}$;

an unbalanced interference device configured to receive a portion of the light beam, split that portion of the light beam into first and second components and then recombine the first and second components after the first component has traversed a first optical path length and the second component has traversed a second optical path length that is longer than the first optical path length by an optical path length difference, thereby to output a recombined beam portion; and

a frequency offset detector arranged to receive the recombined beam portion and operable to output a frequency offset measurement signal, which is amplitude modulated such that a frequency change, $\delta v_{ofs}$, of the frequency comb by an amount

$$\delta v_{ofs} = \frac{c}{\Delta L \cdot \mu}$$

causes the amplitude of the frequency offset measurement signal to be modulated by one cycle, where

$\Delta L$ is the optical path length difference,
$c$ is the speed of light, and
$\mu$ is the refractive index of the medium traversed by the first and second components,

the computer processing method comprising:

receiving a dataset comprising the frequency offset measurement signal collected over a time period; and
analysing the cycles in the frequency offset measurement signal to determine how the frequency comb changes frequency through the time period.

According to a further aspect of the invention there is provided a computer program stored on a computer readable medium and loadable into the internal memory of a computing device comprising software code portions which when run on a computing device perform the above data processing method. There may also be provided a computer program product storing this computer program.

The above-defined comb source apparatus may form part of a dual-comb spectrometer as follows. There is be provided a dual-comb spectrometer comprising:

a comb source apparatus as defined above, whose light beam acts as an interrogator light beam in the dual-comb spectrometer;

a further comb source operable to output a local oscillator light beam containing a further frequency comb consisting of a finite series of further comb lines separated by a further repetition frequency $f_{rep} + \Delta f_{rep}$; and

a sample detector operable to output a sample measurement signal and arranged to receive a superposition of the interrogator and local oscillator light beams after at least the interrogator light beam has traversed a sample space, the superposition causing heterodyne mixing at the sample detector to generate a third frequency comb having a still further repetition frequency $\Delta f_{rep}$ equal to the difference between said repetition frequency and said further repetition frequency.

The above-defined method of operating a comb source apparatus may be part of the operation of a dual-comb spectrometer as follows. There is provided a method of operating a dual-comb spectrometer comprising:

operating a comb source apparatus as defined above, whose light beam acts as an interrogator light beam in the dual-comb spectrometer;

providing a sample in a sample space;

outputting with a second comb source a local oscillator light beam containing a further frequency comb consisting of a finite series of further comb lines separated by a second repetition frequency $f_{rep} + \Delta f_{rep}$; and

measuring with a sample detector a measurement signal from a superposition of the interrogator and local oscillator light beams after at least the interrogator light beam has traversed the sample space, the superposition causing heterodyne mixing at the sample detector to generate a still further frequency comb having a still further repetition frequency $\Delta f_{rep}$ equal to the difference between said repetition frequency and said further repetition frequency.

According to another aspect of the invention there is provided a dual-comb spectrometer comprising:

a first comb source operable to output an interrogator light beam containing a first frequency comb consisting of a finite series of first comb lines separated by a first repetition frequency $f_{rep}$;

a second comb source operable to output a local oscillator light beam containing a second frequency comb consisting of a finite series of second comb lines separated by a second repetition frequency $f_{rep} + \Delta f_{rep}$;

a sample detector operable to output a sample measurement signal and arranged to receive a superposition of the interrogator and local oscillator light beams after at least the interrogator light beam has traversed a sample space, the superposition causing heterodyne mixing at the sample detector to generate a third frequency comb having a third repetition frequency $\Delta f_{rep}$ equal to the difference between the first and second repetition frequencies;

an unbalanced interference device configured to receive a portion of the interrogator light beam, split that portion of the interrogator light beam into first and second components and then recombine the first and second components after the first component has traversed a first optical path length and the second component has traversed a second optical path length that is longer than the first optical path length by an optical path length difference, thereby to output a recombined beam portion; and

a frequency offset detector arranged to receive the recombined beam portion and operable to output a frequency offset measurement signal, which is amplitude modulated such that a frequency change, $\delta v_{ofs}$ of the first frequency comb by an amount

$$\delta v_{ofs} = \frac{c}{\Delta L \cdot \mu}$$

causes the amplitude of the frequency offset measurement signal to be modulated by one cycle, where

$\Delta L$ is the optical path length difference,
$c$ is the speed of light, and
$\mu$ is the refractive index of the medium traversed by the first and second components

The inclusion of the unbalanced interference device as an additional component to a conventional dual-comb spectrometer allows additional data to be collected concurrently with the sample data which can be used to calibrate the frequency axis of the spectra computed from the sample data when the sample data is collected using the above-described sweep-and-interleave acquisition method.

To perform sweep-and-interleave acquisition, a controller can be provided that is configured to apply first and second control signals to the first and second comb sources, the first and second control signals having respective first and second functional forms that cause the first and second frequency combs to sweep repeatedly over first and second frequency tuning ranges. Moreover, a data logger can be provided that is arranged to collect a dataset of data points from the sample detector and the frequency offset detector as the first and second comb lines are swept repeatedly over the first and second frequency tuning ranges. The tuning may be continuous, e.g. smoothly varying, or quasi-continuous, e.g. stepped or incremented. The tuning may be monotonic so that during each sweep the first and second control signals ramp up or ramp down. It will be appreciated that the first and second control signals are coordinated with each other to ensure that the frequency range of the third frequency comb is kept within the bandwidth of the sample detector over the frequency tuning range. The frequency tuning range may be selected to cover a defined fraction of the repetition frequency. The defined fraction of the repetition frequency can be one or more than one. Alternatively, the defined fraction of the repetition frequency can be less than one. The controller may be configured to apply the first and second control signals to tune periodically over the frequency range. Alternatively, the controller may be configured to apply the first and second control signals aperiodically, e.g. asynchronously with the frequency range being tuned over in response to an external trigger, such as from an ignition of a combustion event.

According to yet another aspect of the invention there is provided a method of operating a dual-comb spectrometer comprising:

providing a sample in a sample space;

outputting with a first comb source an interrogator light beam containing a first frequency comb consisting of a finite series of first comb lines separated by a first repetition frequency $f_{rep}$;

outputting with a second comb source a local oscillator light beam containing a second frequency comb consisting of a finite series of second comb lines separated by a second repetition frequency $f_{rep} + \Delta f_{rep}$;

measuring with a sample detector a measurement signal from a superposition of the interrogator and local oscillator light beams after at least the interrogator light beam has traversed the sample space, the superposition causing heterodyne mixing at the sample detector to generate a third frequency comb having a third repetition frequency $\Delta f_{rep}$ equal to the difference between the first and second repetition frequencies; and

measuring with a frequency offset detector a frequency offset measurement signal derived from a portion of the interrogator light beam which has been overlapped with a delayed version of itself by splitting that portion of the interrogator light beam into first and second components and then recombining the first and second components after the first component has traversed a first optical path length and the second component has traversed a second optical path length that is longer than the first optical path length by an optical path length difference, wherein the frequency offset measurement signal is amplitude modulated such that a frequency change, $\delta v_{ofs}$ of the first frequency comb by an amount

$$\delta v_{\text{ofs}} = \frac{c}{\Delta L \cdot \mu}$$

causes the amplitude of the frequency offset measurement signal to be modulated by one cycle, where

$\Delta L$ is the optical path length difference,

$c$ is the speed of light, and

$\mu$ is the refractive index of the medium traversed by the first and second components.

The method may further comprise: adjusting the optical path length difference $\Delta L$ to a value at least approximately equal to $q \cdot c/(f_{rep} \cdot \mu)$, where c is the speed of light, $q$ is an integer, $\mu$ is the refractive index of the medium that the first and second components traverse, and $f_{rep}$ is the repetition frequency of the first frequency comb. This can be performed as a pre-calibration process. The calibration does not have to be precise - it is good enough so long as there is an observable amplitude modulation of the frequency offset measurement signal throughout whatever frequency tuning range of the interrogator comb lines that is envisaged for the data acquisition.

A sweep-and-interleave data acquisition can be performed by: applying first and second control signals to the first and second comb sources, the first and second control signals having respective first and second functional forms that cause the first and second frequency combs to sweep repeatedly over first and second frequency tuning ranges; and collecting a dataset of data points from the sample detector and the frequency offset detector as the first and second frequency combs are swept repeatedly over the first and second frequency tuning ranges.

Calibration can be performed in practice by adjusting the optical path length difference to a value that provides an observable amplitude modulation of the frequency offset measurement signal throughout the frequency tuning range. When a strong sinusoidal amplitude modulation is observed, then it must be the case that the unbalanced interference device is set up somewhere near fulfillment of the matching condition.

The comb sources may be semiconductor laser sources. The semiconductor laser sources may be quantum cascade lasers (QCLs) based on transitions between subbands, or interband cascade lasers (ICLs) based on transitions between bands. QCLs and ICLs have been realized as edge-emitting semiconductor lasers. They have been realized with emission wavelengths across a wide part of the infrared spectral range (3-20 $\mu$m) and operating in continuous-wave (CW) mode at room temperature. QCLs that emit in the mid-infrared region exploit the third-order nonlinearity of the active regions, since it introduces a four-wave-mixing process in the device, which leads to phase-locking of the Fabry-Perot modes, thereby generating frequency combs. Typically, a QCL or ICL lases in three operational regimes which are progressed through as the drive current is increased. The three regimes are the single-mode regime, the frequency comb regime (the regime used in dual-comb spectroscopy) and the high phase noise regime. QCLs or ICLs are used as comb generators in dual-comb spectrometers. A matched pair of QCLs or ICLs is used in a dual-comb spectrometer with one of the pair being driven to output a frequency comb with a frequency spacing that is slightly different from the other. QCLs and ICLs are not the only possible comb sources for dual-comb spectroscopy. Other suitable comb sources are electro-optic comb sources and micro-resonator comb sources as well as photonic integrated circuits - see the following review article and references therein: Fortier, T., Baumann, E. 20 years of developments in optical frequency comb technology and applications. Commun Phys 2, 153 (2019). https://doi.org/10.1038/s42005-019-0249-y.

According to a still further aspect of the invention there is provided a method of computer processing data obtained from a dual-comb spectrometer in which an interrogator light beam containing a first frequency comb and a local oscillator light beam containing a second frequency comb are superimposed on a sample detector after at least the interrogator light beam has traversed a sample to cause heterodyne mixing and generate a third frequency comb, the method comprising:

inputting a sample dataset obtained from detecting the third frequency comb while performing a sweep of the first and second frequency combs multiple times over respective first and second frequency tuning ranges, each sweep being assigned a time index;

inputting a frequency calibration dataset which was obtained concurrently with the sample dataset, thereby to obtain a data calibration subset for each sweep, the frequency calibration dataset having been obtained by measuring with a frequency offset detector a frequency offset measurement signal derived from a portion of the interrogator light beam which has been overlapped with a delayed version of itself to generate an approximately sinusoidally modulated interference signal;

inputting the repetition frequency of the first frequency comb, $f_{rep}$;

processing the sample dataset to determine a beat note amplitude for each beat note at each time index; and

processing the frequency calibration dataset by:

fitting the data calibration subsets to determine a local period, $T(t)$, and a local phase, $\theta(t)$, for the approximately sinusoidally modulated interference signal;

computing frequency changes, $\delta v_{ofs}(t)$, of the first frequency comb from the local period and the local phase; and

determining a frequency offset value, $F_{tn}$, for each beat note, $n$, and for each time index, $t$, from the frequency changes, $\delta v_{ofs}(t)$, and the repetition frequency, $f_{rep}$, according to the formula

$$F_{tn} = \delta v_{ofs}(t) + n \cdot f_{rep}$$

so that each beat note amplitude obtained from the sample dataset is associated with a frequency offset value.

There may be further provided a computer program stored on a computer readable medium and loadable into the internal memory of a computing device comprising software code portions which when run on a computing device perform the above method of computer processing data. A computer program product storing the computer program may also be provided.

## BRIEF DESCRIPTION OF THE DRAWINGS

This invention will now be further described, by way of example only, with reference to the accompanying drawings.

Figures 1A and 1B are schematic diagrams showing the signal amplitude modulation that occurs when a monochromatic beam is passed through an unbalanced interferometer.

Figure 2 is a schematic diagram of a frequency comb.

Figures 3A and 3B are schematic diagrams to be compared with Figures 1A and 1B showing the situation when a frequency comb beam is passed through an arbitrary unbalanced interferometer.

Figures 4A and 4B are schematic diagrams to be compared with Figures 3A and 3B showing the situation when a frequency comb beam is passed through an unbalanced interferometer with a specific path length difference.

Figure 5 shows an example sub-assembly according to the invention which can be added to a conventional dual-comb spectrometer.

Figures 6A and 6B show graphs plotting various parameters detected by the sub-assembly of Figure 5 as it measures a frequency comb being swept across a tuning range.

Figure 7 is a schematic drawing of a dual-comb spectrometer incorporating the sub-assembly of Figure 5.

Figure 8 shows in functional blocks the dual-comb spectrometer of Figure 7 in combination with a control computer.

Figure 9 shows two control signals in the form of two laser drive currents which ramp in tandem to scan over a predetermined fraction of the lasers' free spectral range (FSR).

Figure 10 shows three schematic graphs of amplitude, A, versus optical frequency, $v_{OPT}$, each showing the local oscillator and interrogating frequency combs C1 and C2 at the start, middle and end of a scan at respective times t1, t2 and t3 to cover slightly more than one FSR.

Figure 11 shows two schematic graphs showing a periodic application of the coordinated pair of drive current ramps of Figure 9 to perform repeated scans over a defined frequency tuning range.

Figure 12 shows a flow chart to illustrate how the data acquired by the sub-assembly of Figure 5 is combined with the dual-comb data to calibrate the frequency axis of the sample spectra.

**DETAILED DESCRIPTION**

DEFINITIONS

**Frequency comb:** a form of laser output consisting of a series of discrete, equally spaced frequency components, referred to as teeth, lines, or modes. The separation of the frequency components is referred to as the repetition frequency, $f_{rep}$.

**Free spectral range (FSR):** the spacing in optical frequency between two neighbouring comb teeth. In a dual-comb spectrometer, the respective FSRs of the local oscillator and interrogator are almost the same, i.e. only marginally different, perhaps differing only by a relative value of 1/5000. Hence, in dual-comb spectroscopy, it is usual to refer to "the" FSR even though there are two marginally different FSRs. In the present context, FSR and repetition frequency are synonyms.

**Beat frequencies/notes:** a term used to describe the heterodyne frequencies generated by beating of the local oscillator and interrogation beams in an optical heterodyne system as a consequence of the difference in their FSRs.

**Repetition frequency, $f_{rep}$:** is the frequency difference defining the spacing between the equally distant frequencies comprising a frequency comb. In the present context, FSR and repetition frequency are synonyms.

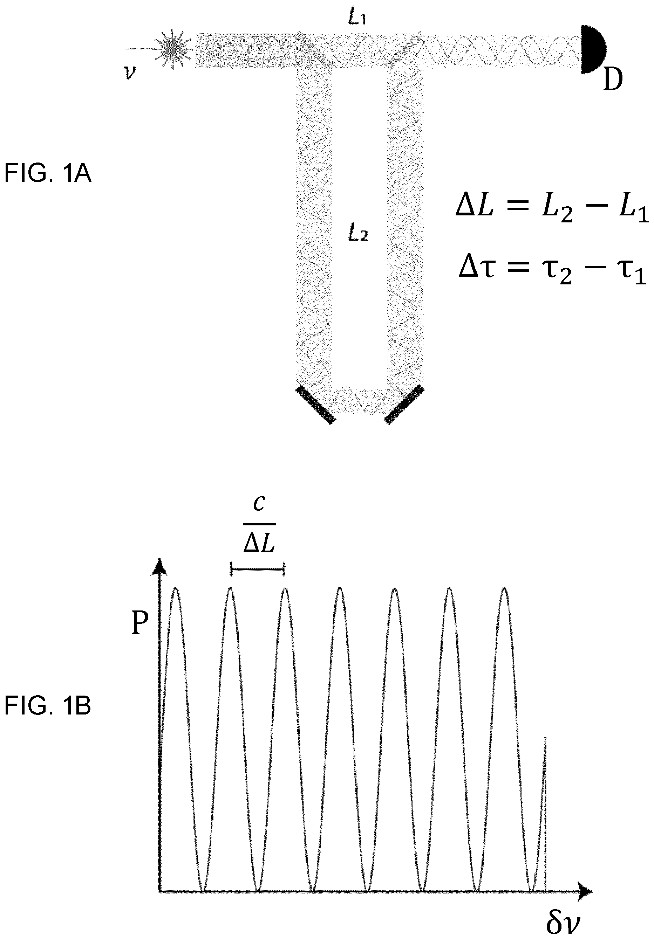

**Figures 1A and 1B** illustrate the well known fact that, when a monochromatic beam of frequency $v$ is overlapped with one or more delayed versions of itself, an interference is produced which results in an optical power that depends on the product of delay time $\Delta\tau$ and the beam frequency $v$. Figure 1A shows an unbalanced Mach-Zehnder interferometer (MZI) which splits a monochromatic beam of frequency $v$ into two components of equal amplitude, one of which takes a time $\tau_1$ to traverse an arm of length $L_1$ while the other component takes a longer time $\tau_2$ to traverse a longer arm of length $L_2$ thereby inserting a relative delay when the two beam components are recombined. The amplitude of the recombined beam, i.e. its power, is measurable at a photodetector D. Figure 1B shows the amplitude of the recombined beam as a function of varying beam frequency $v$ for constant delay time (i.e. the optical path length is not varied). A monotonic change in the monochromatic beam frequency results in a periodic modulation of the optical power. The period, i.e., the change in frequency associated with the power having the same value again, depends on the delay time $\Delta\tau$ (i.e. the magnitude of the optical path length difference $\Delta L$). Every modulation period corresponds to a frequency change $\delta v = c/\Delta L$. It is noted that, since we consider the optical power, $P$, as a function of frequency, the "period" is actually a frequency:

$$P\big(v + v_{\text{period}}\big) = P(v).$$

If the frequency is varied monotonically over time to cover a tuning range, the number of periods that occur over the tuning range can be counted. The optical power modulation can be measured by the photodetector D. The count value can then be multiplied by the period to obtain the total change in frequency over the tuning range.

If now instead of a monochromatic beam we consider a frequency comb beam, the situation is not so simple, since the comb consists of a large number of frequency components (its comb lines) and every comb line contributes separately to the modulation of the optical power.

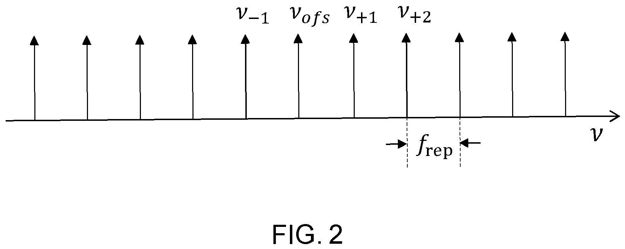

**Figure 2** is a schematic diagram of a frequency comb. A frequency comb consists of a finite series of $N$ comb lines spaced apart from each other by a repetition frequency $f_{rep}$ according to the above-stated formula:

$$v_n(t) = v_{ofs}(t) + n \cdot f_{rep}$$

where an arbitrary one of the comb lines is labeled with index 0 so that the comb lines are at frequencies .... $v_{-2}$, $v_{-1}$, $v_0$, $v_{+1}$, $v_{+2}$ ... where $v_0 = v_{ofs}$. The comb lines may in general have non-equal amplitudes.

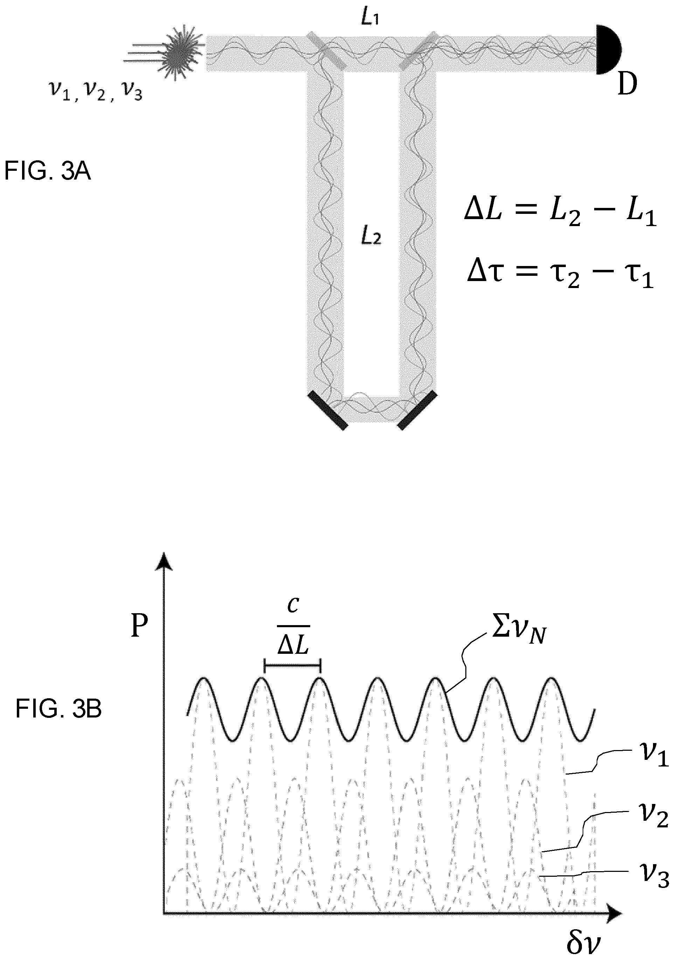

**Figures 3A and 3B** illustrate the situation with a frequency comb beam comprising a plurality of frequency components $v_1$, $v_2$, $v_3$, ... Figure 3B shows that each frequency component (dashed lines) produces a sinusoidal contribution to the optical power measured by the detector. These sinusoidal components may have different amplitudes, depending on the power of the optical frequency components. They all have the same period, $c/\Delta L$, but different phases. In general, when the contributions of all the comb components are summed (solid line), the power modulation will be smeared out and there will be little or no observable amplitude modulation in the recombined beam. It will therefore be difficult, if not impossible, to count the optical power cycles as the comb frequencies shift. Figure 3B shows the smearing effect for three frequency components, but it will be understood that a typical comb as used for dual-comb spectroscopy will have a few hundred comb lines, i.e. frequency components.

However, there is a condition which, if met, leads to the contributions arising from the various comb lines to add constructively when recombined rather than smearing each other out, so the recombined beam has an observable amplitude modulation when the comb lines are frequency shifted in unison, similar to the situation for a monochromatic beam. To understand the matching condition, consider a frequency comb beam that is split into two components. A longer delay, $L_2$, is inserted into one of the components than into the other, $L_1$, and the two components are then recombined, with an optical path length difference, $\Delta L = L_2 - L_1$. The condition to be satisfied for constructive addition of the individual modulations of each comb frequency is that the delay, i.e. the optical path difference, is selected to match the frequency spacing of the comb source. The matching condition is when $\Delta L = L_2 - L_1$ fulfils $\Delta L = qc/f_{rep}$, where $c$ is the speed of light, $q$ is an integer and $f_{rep}$ is the repetition frequency of the frequency comb. When this matching condition is met, a sinusoidally varying signal amplitude occurs when the frequencies of the comb lines are tuned over a range to monotonically increase or decrease.

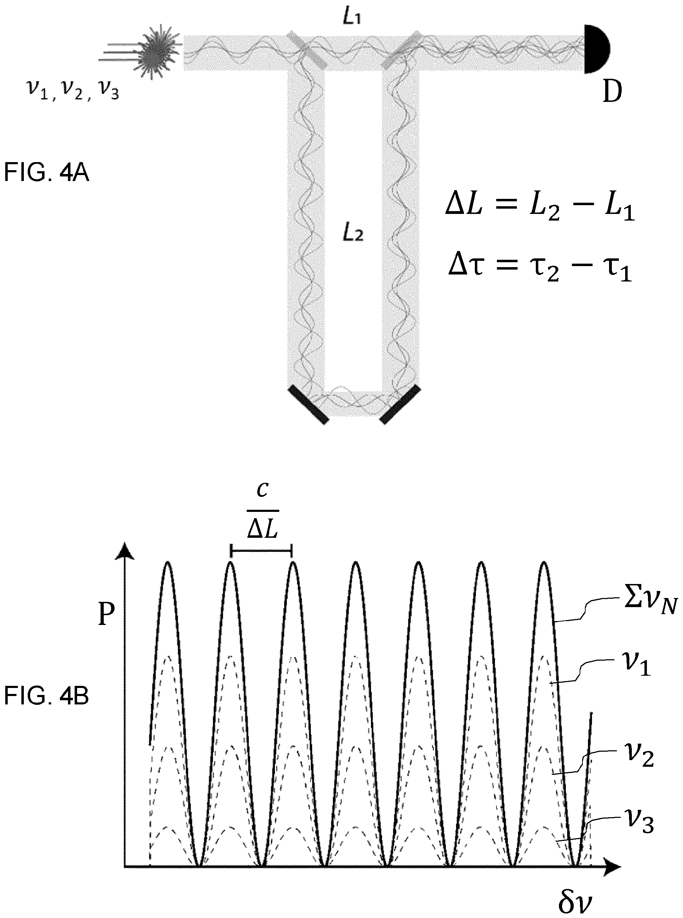

**Figures 4A and 4B** illustrate the matching condition schematically. The individual contributions to the measured signal arising from the individual frequency components of the comb (dashed lines) are all in-phase and thus add up "constructively" to produce a sinusoidal signal (solid line). The period of this sinusoidal signal, $v_{period}$, i.e. how much the frequency of the comb lines has to change before the measured signal starts to repeat itself again, depends on $\Delta L$ according to:

$$v_{period} = \frac{c}{\Delta L}$$

Every full cycle of the measured sinusoid thus corresponds to a frequency change of $v_{period} = c/\Delta L$. For example, with a device length of 4.5 mm and a repetition frequency $f_{rep} \sim 9.8$ *GHz* there is an optical path length difference $\Delta L \sim q \cdot 3$ cm. The measured signal is expected to depend on the change in frequency offset, $\delta v_{ofs}$, in the form:

$$S(\delta v_{ofs}) \sim \text{const} + A \cos\left(\frac{2\pi \, \delta v_{ofs} \, \Delta L}{c} + \psi\right)$$

As an aside, we note that the above equation for the matching condition is for free space propagation (in a vacuum), i.e. with a refractive index, $\mu$, of unity. With propagation in a medium with non-unity refractive index the equation would be:

$$v_{period} = \frac{c}{\Delta L \cdot \mu}$$

i.e. the speed of light in vacuum, $c$, is exchanged for the speed of light in the medium, $c/\mu$-Elsewhere in this document, we take $\mu = 1$ for simplicity. This will not only be accurate for vacuum propagation, but also a very good approximation for propagation in ambient air or another gas, such as nitrogen or helium.

The skilled person will understand that any arrangement in which two or more delayed versions of the same beam are generated and overlapped to interfere with each other can be used. One option is to pass the frequency comb beam through an unbalanced interferometer. Examples of an unbalanced interferometer types that are suitable are a Mach-Zehnder interferometer or a Michelson interferometer. In principle, any interferometer type could be used. The interferometer may be realized with free space components, e.g. beam splitters, mirrors, polarisation components and a polarising beam splitter for recombination. Alternatively, the interferometer may be realized in a solid-state medium such as optical fibre that can waveguide in the mid-infrared, a semiconductor waveguide structure, e.g. made of a suitable semiconductor material, or a glass waveguide structure. The optical path length difference (i.e. delay) can also be provided by a Fabry-Perot etalon, e.g. in a bulk material such as a slab of germanium, or with an air- (or vacuum-) spaced etalon. Another option for providing the interference mixing is to use an optical resonator, such as a confocal cavity.

Whatever the choice of arrangement for the interference device, it is important to set the unbalanced interference device to the matching condition prior to data acquisition of a set of dual-comb spectroscopy data. This can be achieved if the interference device allows the optical path difference to be adjusted. Adjustment can be done, for example, as part of an initial set-up of the dual-comb spectrometer to perform a sweep-and-interleave acquisition over a certain frequency tuning range. The initial set-up will set the optical path difference to maximize the modulation of the interferometric signal over the frequency tuning range that is to be covered by the "sweep" part of the dual-comb acquisition method. The modulation signal over a sweep will vary sinusoidally. This sinusoidal modulation of the signal amplitude allows the total change in frequency associated with each beat note to be extracted from the signal. Referring again to the expression for the frequency components of the swept frequency:

$$ v_n(t) = v_{\text{ofs}}(t) + n \cdot f_{\text{rep}} $$

the sinusoidal modulation tracks the change in the comb component base frequency, the offset frequency $v_{\text{ofs}}$ during the sweep with a peak in the modulation occuring every time $v_{\text{ofs}}$ has shifted by a further $c/\Delta L$.

It should be noted, that if the repetition frequency changes as well, $f_{\text{rep}} = f_{\text{rep}}(t)$, then each comb line shifts by a different amount. In that case, the measured frequency shift, $v_{\text{ofs}}(t)$, is a weighted average representing the overall comb shift. In general, there is no comb line that shifts exactly as $v_{\text{ofs}}(t)$; some will shift slightly more, others slightly less. However, there will be at least one comb line which shifts by a value very close to $v_{\text{ofs}}(t)$; let us indicate it with the index $n_0$. Then, for all comb lines, the optical frequency can be written as

$$ v_n(t) = v_{\text{ofs}}(t) + (n - n_0)f_{\text{rep}}(t). $$

This approach enables measurement of the change in offset frequency of each comb component while the sweep is taking place without the need for any reference lines. For example, a reference cell, such as one containing methane gas, is not needed to calibrate the frequency axis of a dataset acquired with the sweep-and-interleave acquisition method.

It will be understood that the sinusoidal modulation signal allows the change in the offset frequency, $\delta v_{\text{ofs}}$, of every comb component to be tracked over the sweep, but does not give an absolute measure of the $v_{\text{ofs}}$, which, as mentioned earlier, is $v_{\text{ofs}}(t) = v_{\text{ofs}}(0) + \delta v_{\text{ofs}}(t)$, with an unknown $v_{\text{ofs}}(0)$. In other words, the sinusoidal modulation allows the frequencies **v(m,t)** to be known up to an additive constant ($v_{\text{ofs}}(0)$), i.e. the frequency axis is calibrated, but will be shifted from the true absolute frequency by an unknown constant. The comb's emission spectrum is usually measured - e.g., with an FT-IR spectrometer- as part of the characterization measurements of the spectrometer. An approximate (e.g., $\pm \sim$ 5 cm$^{-1}$ if the comb spans 50 cm$^{-1}$) value for the unknown constant is therefore derived from the comb specifications.

To determine absolute frequency, all that is needed additionally is for the signal to contain one reference absorption line of known frequency. This is to be compared with the prior art reference cell approach described above which needs the spectrum to contain a number of reference lines spread - preferably relatively evenly - across the measured frequency range. Here it is noted that a relative frequency axis calibration is often adequate, e.g. when only frequency differences between spectral transitions are of interest, or transition widths, or all the spectra contain a common, known peak which can be used as a *de facto* frequency reference.

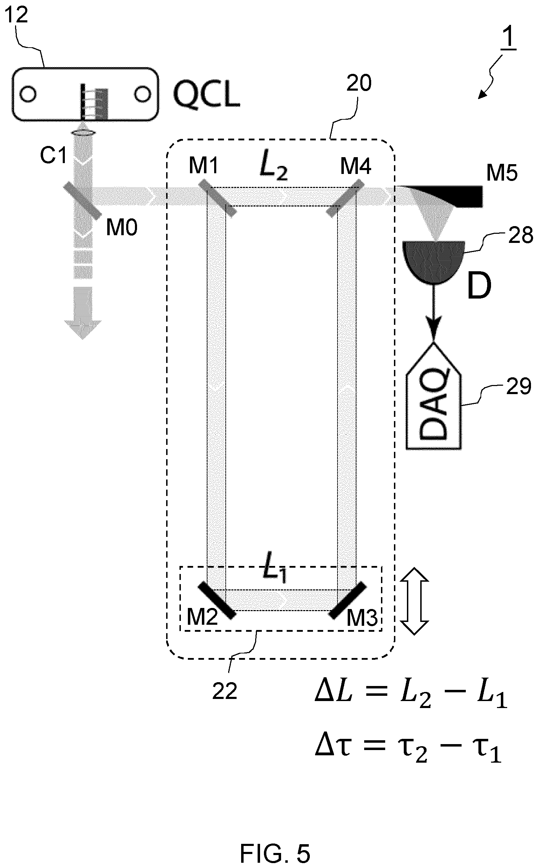

**Figure 5** is a schematic diagram of an example interferometer sub-assembly 1 for providing the modulation signal. A comb source 12, illustrated as a QCL, is operable in the comb regime to output a frequency comb beam C1. A portion of the comb beam C1 is tapped off, e.g. by a suitable beam-splitter M0. The tapped-off beam portion is then fed through an unbalanced MZI 20. The MZI 20 comprises an input beam-splitter M1 to perform a 50:50 power split of the incident beam into two components, one of which is transmitted through the beam-splitter M1 and the other reflected into respective arms of the MZI 20. A pair of mirrors M2 and M3 is arranged in the reflected beam arm to divert the beam through 180 degrees. A further beam-splitter M4 is arranged to recombine the two beam components. The recombined beam is then focused by a concave mirror M5 onto a photodetector D 28 whose electrical output signal is digitized in a digitizer DAQ 29. The MZI 20 has an adjustable path length L1 which is adjustable via a linear positioner P on which the mirror pair M2, M3 is mounted. To prepare for use of the dual-comb spectrometer for sweep-and-interleave acquisition, the path length L1 is adjusted by the positioner 22 so that, at a desired frequency lying near the middle of the intended sweep tuning range, the signal modulation of the recombined beam output by the MZI 20 is maximized. A practical approach for making this adjustment and at the same time obtaining a value for $\Delta L$ is to measure the absorption spectrum of a gas with several known absorption lines and adjust the longer optical path length $L_1$ until the frequencies of the known absorption lines match their expected values as closely as possible. The path length L1 is then set such that the matching condition is satisfied at or near the mid-frequency of the sweep. The dual-comb spectrometer can now be used to perform sweep-and-interleave data acquisition at the intended frequency range of the sweep while the modulation signal is simultaneously acquired.

We now describe a way to compute changes in the frequency of a frequency comb from the measured interferometric signal. We know that, as the comb centre frequency shifts, the frequency offset measurement signal is modulated by one cycle each time the centre frequency of the frequency comb shifts by $c/\Delta L$. It is therefore possible to track changes in the centre frequency of the frequency comb as a function of time through analysing these cycles, e.g. by counting them. For example, the zero-crossings (both from negative to positive and vice versa) could be detected in the frequency offset measurement signal, with the zero-crossing count being denoted by $k$ = 1, 2, 3 ..... Defining the first zero-crossing as a (relative) frequency of 0, the subsequent frequency shift is known from the zero-crossing count according to

$$\delta \nu_{\text{ofs}}^{k} = \frac{(k-1)c}{2\Delta L}$$

Instead of only using the zero-crossings, the local maxima and minima could be detected as well. A numerical processing method could then proceed to assign the count index $k$ to a particular time t as follows:

- Detect all zero-crossings, all local maxima, all local minima

- Create an ordered array $t = (t_0, t_1, t_2, t_3, ...)$, containing the time values at which the signal crosses zero, or has a local maximum, or has a local minimum. For example: $t_0$: time of zero-crossing (upwards), $t_1$ : time of local maximum, $t_2$: time of zero-crossing (downwards), $t_3$: local minimum, etc.

- Create another array of the same size and populate it with multiples of $\frac{c}{4\Delta L}$, namely

$$\boldsymbol{\delta \nu_{\text{ofs}}} = \left(0, \frac{c}{4\Delta L}, \frac{c}{2\Delta L}, \frac{3c}{4\Delta L}, \frac{c}{\Delta L}, ... \right)$$

- Then $\delta\boldsymbol{\nu_{\text{ofs}}}$ versus $\boldsymbol{t}$ gives the (relative) shift in the comb frequency.

We now describe a more sophisticated way to compute changes in the frequency of a frequency comb from the measured interferometric signal which can be used in dual-comb spectroscopy when the interrogator frequency comb is tuned over a frequency range at a nominally constant rate, i.e. with a nominally linear sweep. If the sweep could be made precisely linear, then the frequency offset would be precisely linearly dependent on time and the modulation signal would be a sinusoid with a single period across the frequency tuning range of the sweep. This would be the ideal simplified case. However, of course, in general it will not be possible to ensure that the tuning rate, i.e. the rate of change of the frequency offset, is precisely constant. To account for this non-linearity, the post-processing method for calibrating the frequency axis needs to be able to deal with a tuning rate that varies somewhat. A non-constant tuning rate may be thought of as a slight squeezing or stretching of the modulation signal localized to each part of the sweep. At any particular part of the sweep, the modulation signal will therefore have a local period while still, to a good approximation, being sinusoidal. The time variation of the offset frequency of the interrogator frequency comb is encoded in this local period.

The task of post-processing the modulation signal, $S(t)$, is to determine the offset frequency, $\nu_{\text{ofs}}(t)$, as a function of time and then apply this to calibrate the frequency axis of the dual-comb spectroscopy signal. Assuming that around the time instant $t_0$ the offset frequency tunes with a *locally* constant rate, then the measured signal is *locally* a cosine with a local period $T(t_0)$, local phase $\theta(t_0)$, and local amplitude $A(t_0)$. Hence in a time window width d around any particular time point $t_0$ in the sweep, i.e.:

$$\text{for } t_0 - \frac{d}{2} \leq t \leq t_0 + \frac{d}{2} \quad : \quad S(t) \approx A(t_0) \cos\left(\frac{2\pi t}{T(t_0)} + \theta(t_0)\right)$$

where the time window width *d* is chosen to be small enough to ensure that the assumption of constant tuning rate is fulfilled, but large enough to allow fitting of the model:

$$m(t; t_0) = A(t_0) \cos\left(\frac{2\pi t}{T(t_0)} + \theta(t_0)\right)$$

so as to yield accurate values for the three fit parameters, *A, T,* and $\theta$. By repeated fitting of the model to data over the sweep range using a moving window of width *d* around every time point $t_0$, we obtain the local period and phase for all instants of time: $T(t)$, $\theta(t)$. By comparing the total phase of the model

$$\frac{2\pi t}{T(t)} + \theta(t)$$

to the total phase of $S(\delta v_{\text{ofs}})$,

$$\frac{2\pi \, \delta v_{\text{ofs}}(t) \Delta L}{c} + \psi$$

we find

$$\delta v_{\text{ofs}}(t) = \frac{c}{\Delta L}\left[\frac{t}{T(t)} + \frac{\theta(t) - \psi}{2\pi}\right]$$

If we arbitrarily set, $\psi = \theta(0)$, then $v_{\text{ofs}}(0) = 0$ and we have a measure for the change in frequency offset from the instant $t = 0$ of:

$$\delta v_{\text{ofs}}(t) = \frac{c}{\Delta L}\left[\frac{t}{T(t)} + \frac{\theta(t) - \theta(0)}{2\pi}\right]$$

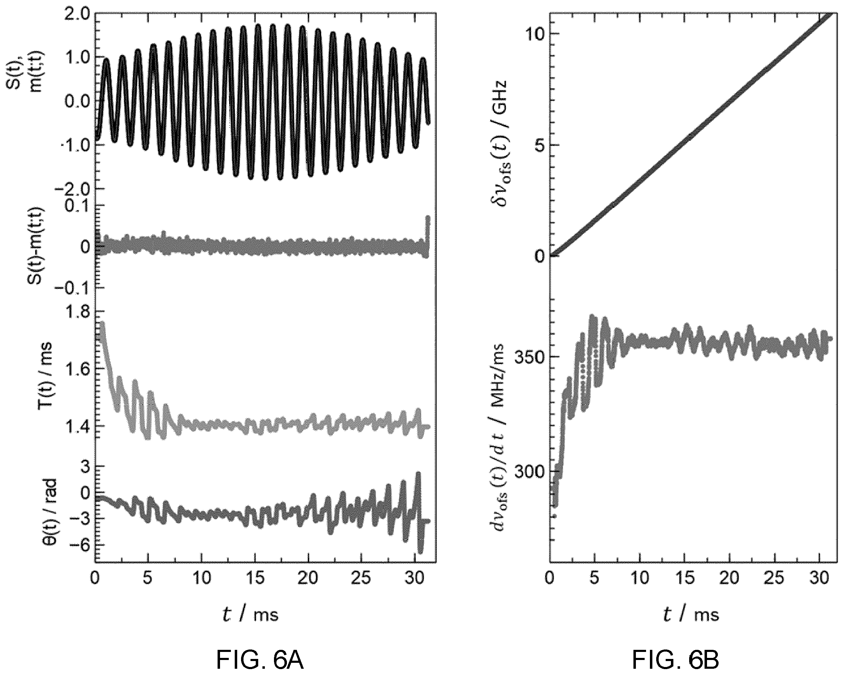

**Figures 6A and 6B** show graphs plotting various parameters detected by the unbalanced interferometer 1 as it measures a frequency comb being swept across a tuning range. The example sweep is a monotonic increase in frequency of the frequency comb that takes place over approximately 30 ms and is intended to be linear with time, although this is not exactly achieved.

Figure 6A shows from top to bottom: the first graph plots the amplitude of the modulation signal. The signal $S(t)$ is shown with the solid line and the model fit $m(t;t)$ to the signal is plotted with dots. However, the dots are not visible, since the model fit is good. The signal can be seen to follow an at least approximately periodic variation, appearing to be a sinusoid contained within an envelope, where the maximum amplitude swing is near the middle of the sweep. The second graph shows the residuals, i.e. the difference between the signal and the model fit $S(t) - m(t;t)$. The residuals show that the chosen model fits the data well, apart from random measurement noise. The third and fourth graphs plot the local period $T(t)$ and the local phase $\theta(t)$ of the modulation signal. The period and phase graphs show the relatively small local deviations from a precisely linear sweep: the instantaneous tuning rate is not constant.

Figure 6B shows in its upper graph the comb offset frequency as a function of time, $\delta v_{ofs}(t)$. Over the sweep it can be seen that the comb frequency increases by approximately 10 GHz.

The lower graph shows the variation in the tuning rate over the sweep, $v_{ofs}(t)/dt$, i.e. its deviation from a constant tuning rate. The tuning rate initially increases sharply over the first few milliseconds of the sweep and then stabilizes at around 350 MHz/ms. This behaviour is linked to the triangular waveform of the current modulation that we have used in these experiments: when the current peaks, the tuning rate changes sign passing through zero. This occurs just before $t = 0$ in this example, so that in the first few milliseconds we still observe this transient, since it is not experimentally possible to instantaneously follow the sign change.

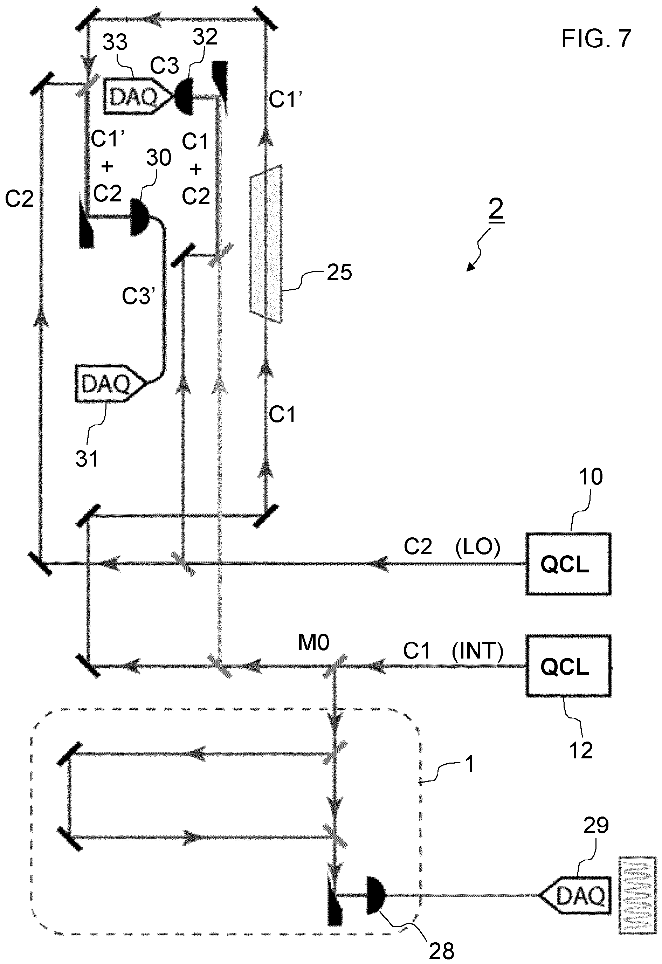

**Figure 7** is a schematic drawing of a dual-comb spectrometer 2 incorporating the interferometer sub-assembly 1 of Figure 5. The dual-comb spectrometer 2 comprises a pair of laser sources 10, 12, for example quantum cascade lasers (QCLs) or interband cascade lasers (ICLs). The illustrated dual-comb spectrometer 2 is based on a QCL 10 serving as a local oscillator (LO) and a QCL 12 serving as the interrogator (INT). For example, these may be a matched pair of InGaAs/AllnAs on InP dual-stack QCLs. The two QCLs 10, 12 generate respective light signals containing respective frequency combs C1 and C2, each having frequencies consisting of a finite series of discrete frequencies. Combining the first and second light beams results in the photocurrent output by a photodetector receiving such a combined beam generating a superposition of sinusoidal oscillations in the photocurrent, with a set of frequencies evenly spaced by the difference between the first and second repetition frequencies, representing a third frequency comb which is an interferogram of the first and second frequency combs formed by heterodyne mixing at the detector. The interferogram frequency comb is thus shifted in frequency by several orders of magnitude to lower frequencies relative to the first and second frequency combs. We refer to the frequency range of the third comb as lying in the RF, following normal usage, although the frequency range may not in all cases be in the radio frequency range (i.e. 20 kHz - 300 GHz) as would be understood by an RF engineer.

The QCLs 10, 12 are driven by respective current drivers (not shown) for supplying suitable drive currents to the QCLs. In one real example, each laser emits around 300-400 mW of average power at 1.1 A (typical drive current). The output beams from QCLs 10 and 12 are split and guided respectively by a suitably arranged beam splitters and plane mirrors. The current drivers are in turn controlled by respective voltage control signals supplied by a waveform generator (WFG) which defines first and second functions for impressing on the voltage control signals. The functions each have a rising portion designed to cause the two QCLs 10, 12 to be tuned so as to scan a sample over a predetermined range. The voltage functions output by the WFG are then applied to generate corresponding drive current functions to drive the QCLs 10 and 12. The functions can be applied periodically to scan repeatedly.

The INT frequency comb beam C1 traverses the sample 25 which attenuates its amplitude through absorption and also induces a phase shift. We label the INT frequency comb beam after its passage through the sample 25 with an additional prime symbol as C1'. The interrogating frequency comb beam C1' that has passed through the sample 25 and the local oscillator frequency comb beam C1 are detected together as a combined RF comb C3' at an optoelectronic photodetector 30, referred to as the sample detector, which outputs an analog electronic signal through an output line to a digitizer DAQ 31. The analog electronic signal has an amplitude proportional to the incident light intensity.

A reference combined comb C3 formed by simultaneous incidence of the INT and LO comb beams C1, C2 (both without sample traversal) is detected at a further photodetector 32, referred to as the normalizing detector. This provides a normalizing signal which is used for normalizing the combined comb signal C3' that encodes the sample-specific spectroscopic information. The normalizing detector 32 also outputs an analog electronic signal through an output line that has an amplitude proportional to the incident light intensity on that photodetector. It will be appreciated that equivalent optical fiber components could be used instead for manipulating the beams through the sample and onto both the sample detector 30 and normalizing detector 32. The two QCL combs are thus heterodyned on both photodiodes 30 and 32 leading to respective RF combs C3' and C3 being contained in the electrical signals output from the respective photodiodes 30, 32. The sample photodetector 30 measures the interferogram C3' of the combs C1', C2' (where combs C1 and C2 have been attenuated and phase-shifted to become combs C1', C2' by traversing the sample 25), whereas the normalizing detector 32 measures the interferogram C3 of the combs C1, C2 (without influence of the sample 25).

The signal collected by the normalizing detector 32 serves to cancel or suppress common mode fluctuations between the QCLs, e.g., due to relative fluctuations between the (optical) output powers of the two QCLs. In principle the reference branch of the dual-comb spectrometer is not needed, i.e., only the path through the sample is required. However, in practice, inclusion of a reference branch is desirable, e.g., in case the sample is completely absorbing at some wavelengths, then any feedback control that depends on analysing the detector signal will disappear, causing a temporary break in the control loop.

The set-up shown in Figure 7 has a configuration in which only the interrogating comb beam is transmitted through the sample 25, while the LO beam is not, which measures both the amplitude and phase response of the sample. A known alternative set-up is when both the interrogating comb beam and the reference beam are transmitted through the sample 25, which measures only the amplitude response of the sample, i.e., its absorption. The RF comb beam that encodes the sample-specific spectroscopic information is thus a combination of C1' and C2'. Embodiments of the disclosure are also applicable to this alternative set-up, although not further detailed herein. The two configurations differ only in respect of how the comb beams C1, C2 are routed.

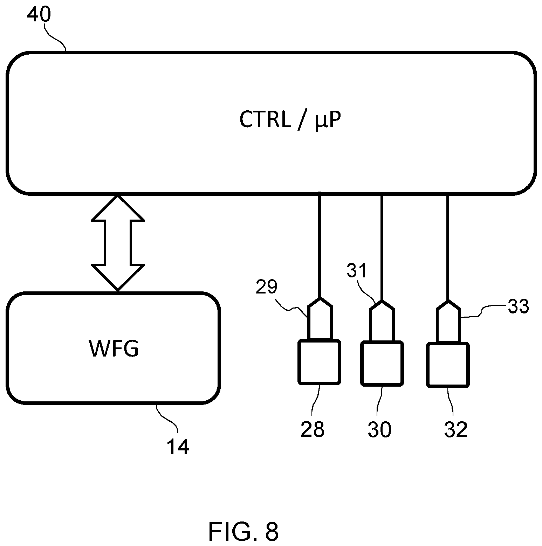

**Figure 8** shows in functional blocks the dual-comb spectrometer 2 of Figure 7 in combination with a computer 40 to provide a controller for control of the spectrometer 2. The computer 40 is configured to program and actuate the WFG 14 via a suitable bus interface. The computer 40 is also connected to receive and store the digitized data derived from the photodetectors 28, 30 and 32 via the respective and DAQs 29, 31, 33. After each scan, or batch of scans, the raw digitized data may be written to disk, or otherwise stored in memory, without any initial processing. In one example, there is ca. 1 GByte of data per measurement scan. The control computer & data logger 40 may also contain a graphics processor unit (GPU) or field programmable gate array (FPGA) or a programmable logic array (PLA) for data-processing.

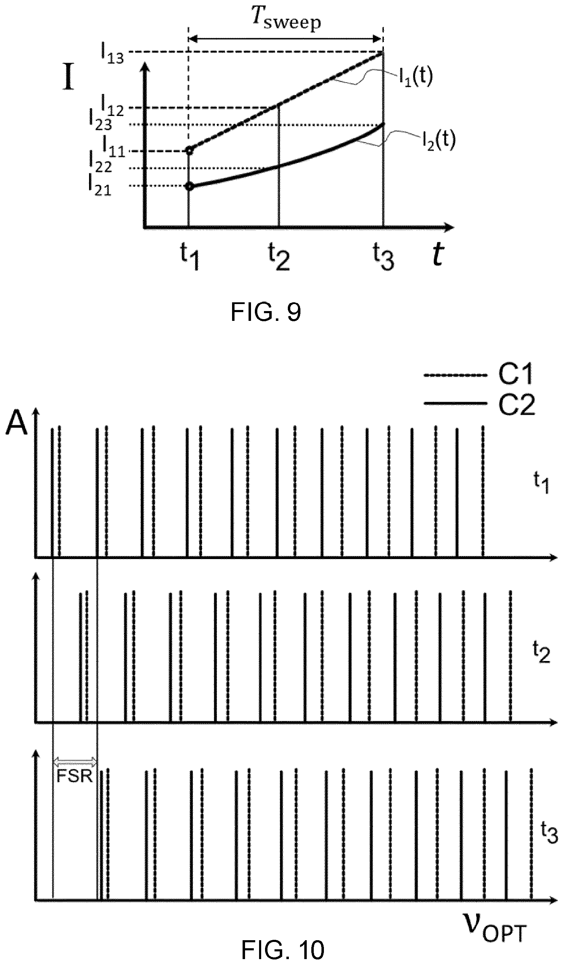

**Figure 9** is a graph of current, I, versus time, t, showing two current ramps with functional forms $I_1(t)$ and $I_2(t)$ for driving the first and second laser sources respectively to perform a single sweep across a selected frequency tuning range, where $t_3 - t_1 = T_{sweep}$. The frequency combs C1 and C2 are tuned over >1 FSR. The starting points of the ramps, at time t1 with currents $I_{11}$ and $I_{21}$, are selected in a way to generate a heterodyne signal C3 that lies within the bandwidth of the detectors 30, 32. The ramps increase the currents monotonically, via an arbitrary intermediate time t2 with drive currents $I_{12}$ and $I_{22}$, and on to the ramp end points at time t3 with currents $I_{13}$ and $I_{23}$.

**Figure 10** shows the corresponding tuning of the two frequency combs C1 and C2 at times t1, t2 and t3 with schematic graphs of amplitude, A, versus optical frequency, $v_{OPT}$. It can be seen that the scan results in both combs C1 and C2 covering somewhat more than one FSR during the tuning, e.g. about 1.1 or 1.2 x FSR. By scanning over at least one FSR, the collected spectrum is gapless and so, even if the sample has line features much narrower than the FSR, they will not be missed. In other words, a $\geq$ 1 x FSR tuning provided by the two ramps enables a reduction of the effective spectral point spacing by a factor equal to the ratio of the FSR of the QCLs, i.e. their native spectral sampling period, to the spectral resolution of the spectrometer. To provide gapless coverage it can be beneficial to scan by a little more than one FSR, e.g. 1.1 to 1.3 FSRs, so that there is a sizeable overlap between signal fragments collected from each neighbouring comb-tooth pair. In some cases, it may be beneficial to scan over several FSRs, since this allows averaging out of uneven signal-to-noise ratios (SNR) from different scans, since SNR depends on signal strength of individual beat-notes. In other cases, it may not be of interest to have a gapless, continuous scan of the full spectrum, for example when the purpose of the scan is only to establish the presence or absence of a particular molecular species. If a particular molecule is being targeted, then the scan range can be tailored to scan over where the strongest resonances for that molecule lie. It is noted that a molecular resonance, at least for a small molecule, is likely to have a bandwidth at least one order of magnitude smaller than the FSR. In such cases, it may be sufficient to scan over a small fraction of the FSR targeted on the molecule being sensed, e.g. as little as 0.1 or 0.2 of the FSR.

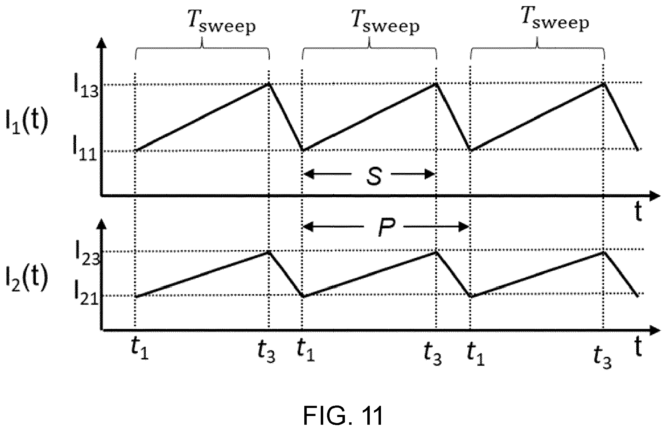

**Figure 11** contains two schematic graphs showing periodic application of a coordinated pair of drive current ramps as shown in Figure 9. The first and second control signals are applied repeatedly to perform repeated scans over successive time intervals during which data is collected. A series of datasets is thus collected which can be averaged to improve the signal-to-noise ratio or combined to show the time evolution of the sample response. The ramps are applied repeatedly to perform multiple sweeps with first and second ramp segments, S, each of duration $T_{sweep}$ where the first and second ramp segments are incorporated as part of first and second periodic functions with a common periodicity P. A scan, S, thus forms a fraction S/P of the period P. The periodic functions can be selected so that the return part of the drive current occurs over a relatively short proportion of the total period, so that S/P --> 1 and dead time is kept small (i.e. sawtooth function). An inverted form would also be equivalent, i.e. with data acquisition on a long downslope and rapid return on the upslope. Another option for keeping dead time small, or even zero, is for data to be collected both on the upslope and the downslope, in which case the magnitude of the gradients of the upslope and downslope would beneficially be set to be approximately equal (isosceles triangle function). The functional form of the drive currents will of course be subject to variation from a pure geometric function, e.g. variations due to limitations of the WFG or variations that are deliberately introduced by adding adjustments for any of the reasons discussed elsewhere in this document. An alternative to applying a pair of periodic drive current functions is to collect data in single shots in which the ramp pairs are applied once in response to a single trigger, so as to collect a single dataset from a single scan over the desired fraction of the FSR. Repeated scans may also be collected in this way, each scan being asynchronously triggered, where the trigger may be responsive to some input, such as confirmation that the data from the last scan has been read out or the DAQs have been relatched, or confirmation that the sample is ready for the next measurement. For example, each sample may need to recover from being exposed to a pump laser beam, or the sample may constitute a continuous flow of live cells through a microfluidic channel, so a scan is triggered each time a cell passes through a particular location in the fluid flow passage.

The ramps may not be smooth functions, but rather implemented in steps. Steps may arise simply from the equipment being used, for example a digital WFG may output a drive current that is stepped in time, when looked at with high-enough resolution. The WFG may also be programmed to increment the drive current in steps and dwell a short time at each step, e.g. to provide a fixed number of data points for each scan, e.g. one that is equal to a power of 2 and so matched to a discrete Fourier transform (DFT) processing algorithm such as 256, 512, 1024 etc.

The above discussion of the ramps and how to coordinate them was made in relation to adjusting the laser drive currents. It will be understood that the lasers may also be adjusted by adjusting their temperatures, and temperature adjustment may be used instead of current adjustment, or the lasers may be controlled by a combination of drive current and temperature adjustment. Other adjustment possibilities may also be available based on any parameter that can be varied so as to modulate refractive index or temperature of the sources, e.g. broadband illumination of a part of the source or RF-injection as is now discussed.

As described above, to perform a tune-and-interleave dual-comb spectroscopy acquisition, the dual-comb spectroscopy signal is acquired simultaneously with the modulated signal output from the unbalanced interferometer. The two signals are then combined in post-processing so as to calibrate the frequency axis of the dual-comb spectroscopy signal.

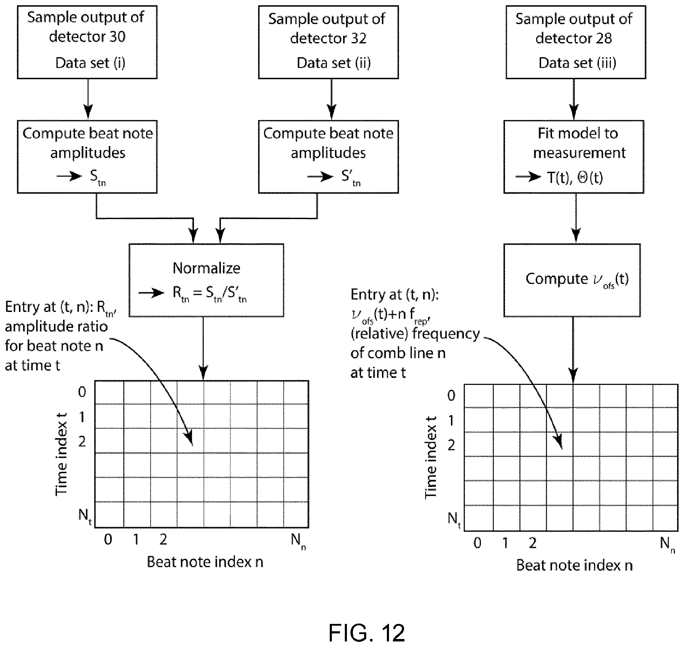

**Figure 12** is a flow chart of the post-processing. Three datasets are recorded: (i) the digitized data sampled on detector 30; (ii) the digitized data sampled on detector 32; and (iii) the digitized data sampled on detector 28. From the datasets (i) and (ii) the $N_n$ beat note amplitudes at $N_t$ time instants are computed. Then, from the amplitudes, $S_{tn}$ and $S'_{tn}$, the amplitude ratios, $R_{tn}$, are computed. These values can be arranged in a 2-dimensional array with $N_n$ columns and $N_t$ rows. For the absorbance or dispersion values, an additional background measurement is required, which allows removal of the contributions to the beat note amplitude ratios that do not encode any sample-specific information, such as contributions arising from the comb sources and the various mirrors and other optical elements in the beam paths. From the dataset (iii), the values to populate the "frequency matrix" are derived: the model

$$m(t; t_0) = A(t_0) \cos\left(\frac{2\pi t}{T(t_0)} + \theta(t_0)\right)$$

is fitted to the recorded data, yielding the local period, $T(t)$, and the local phase, $\theta(t)$. Then the frequency shift, $\delta v_{\text{ofs}}(t)$, is computed with

$$\delta v_{\text{ofs}}(t) = \frac{c}{\Delta L}\left[\frac{t}{T(t)} + \frac{\theta(t) - \theta(0)}{2\pi}\right]$$

Finally, the "frequency matrix" is populated with values

$$F_{tn} = \delta v_{\text{ofs}}(t) + n f_{\text{rep}}$$

If the repetition frequency is not constant, then it must be measured as well (or otherwise known). In that case, the matrix $F$ is defined by

$$F_{tn} = \delta v_{\text{ofs}}(t) + (n - n_0) f_{\text{rep}}(t)$$

where $n_0$ is the index of the comb line to which the measured average comb shift, $\delta v_{\text{ofs}}(t)$, is assigned. The additional data collected from the tapped off portion of the interrogator comb beam by the interferometer therefore allows a frequency offset value to be calculated for every beat note index at every time index. It is also noted that the process flow would be simplified if normalization was omitted, i.e. if there was no detector 32, through the omission of the associated normalization.

In summary, it is necessary to know both $\delta v_{\text{ofs}}$ and $f_{\text{rep}}$ (or $v_{\text{ofs}}$ and $f_{\text{rep}}$) at every instant of a sweep in order to provide a relative (or absolute) frequency axis calibration for the measured absorbance or transmission. These parameters must therefore be measured, computed, or known a *priori*. While the repetition frequency $f_{\text{rep}}$ is easily determined,

this is not the case for the time varying offset frequency $\delta v_{ofs}(t)$ (or $v_{ofs}(t)$) that is characteristic of the sweep-and-interleave acquisition method. We have shown how an interferometric measurement of the interrogator comb made with an unbalanced interferometer with an optical path difference set to comply with a special matching condition can be used to determine the time varying offset frequency $\delta v_{ofs}(t)$ of the interrogator beam as the interrogator comb is tuned across a frequency range to acquire sample data. The matching condition ensures that the signal contributions arising from the different comb lines stay in phase when they are recombined in the unbalanced interferometer, so that their contributions sum in an additive way, rather than smearing each other out. Knowledge of the time varying offset frequency $\delta v_{ofs}(t)$ of the interrogator beam allows a relative frequency axis calibration to be performed. Frequency axis calibration is thus achieved without any external frequency reference.

It will be clear to one skilled in the art that many improvements and modifications can be made to the foregoing exemplary embodiment without departing from the scope of the present disclosure.

The following numbered clauses give further definitions according to the disclosure:

1. A dual-comb spectrometer comprising:

a first comb source operable to output an interrogator light beam containing a first frequency comb consisting of a finite series of first comb lines separated by a first repetition frequency $f_{rep}$;

a second comb source operable to output a local oscillator light beam containing a second frequency comb consisting of a finite series of second comb lines separated by a second repetition frequency $f_{rep} + \Delta f_{rep}$;

a sample detector operable to output a sample measurement signal and arranged to receive a superposition of the interrogator and local oscillator light beams after at least the interrogator light beam has traversed a sample space, the superposition causing heterodyne mixing at the sample detector to generate a third frequency comb having a third repetition frequency $\Delta f_{rep}$ equal to the difference between the first and second repetition frequencies;

an unbalanced interference device configured to receive a portion of the interrogator light beam, split that portion of the interrogator light beam into first and second components and then recombine the first and second components after the first component has traversed a first optical path length and the second component has traversed a second optical path length that is longer than the first optical path length by an optical path length difference, thereby to output a recombined beam portion; and

a frequency offset detector arranged to receive the recombined beam portion and operable to output a frequency offset measurement signal, which is amplitude modulated such that a frequency change, $\delta v_{ofs}$ of the first frequency comb by an amount

$$\delta v_{\mathrm{ofs}} = \frac{c}{\Delta L \cdot \mu}$$

causes the amplitude of the frequency offset measurement signal to be modulated by one cycle, where

$\Delta L$ is the optical path length difference,
$c$ is the speed of light, and
$\mu$ is the refractive index of the medium traversed by the first and second components.

2. The spectrometer of clause 1, wherein the unbalanced interference device is configured such that the optical path length difference $\Delta L$ is set to a value that at least approximately equals $q \cdot c/(f_{rep} \cdot \mu)$, where c is the speed of light, $q$ is an integer, $\mu$ is the refractive index of the medium traversed by the first and second components in the unbalanced interference device, and $f_{rep}$ is the repetition frequency of the first frequency comb.

3. The spectrometer of clause 1 or 2, further comprising:

a controller configured to apply first and second control signals to the first and second comb sources, the first and second control signals having respective first and second functional forms that cause the first and second frequency combs to sweep repeatedly over first and second frequency tuning ranges; and

a data logger arranged to collect a dataset of data points from the sample detector and the frequency offset detector as the first and second comb lines are swept repeatedly over the first and second frequency tuning ranges.

4. The spectrometer of clause 3, wherein the unbalanced interference device is configured such that the optical path length difference is set to a value that provides an observable amplitude modulation of the frequency offset measurement signal throughout the frequency tuning range of the first frequency comb.

5. The spectrometer of any preceding clause, wherein the unbalanced interference device is configured to allow at least one of the first and second optical path lengths to be adjusted, thereby to adjust the optical path length difference.

6. The spectrometer of any preceding clause, wherein the unbalanced interference device is selected from the group: an interferometer; a Fabry-Perot etalon; and an optical resonator.

7. A method of operating a dual-comb spectrometer comprising:

providing a sample in a sample space;
outputting with a first comb source an interrogator light beam containing a first frequency comb consisting of a finite series of first comb lines separated by a first repetition frequency $f_{rep}$;
outputting with a second comb source a local oscillator light beam containing a second frequency comb consisting of a finite series of second comb lines separated by a second repetition frequency $f_{rep} + \Delta f_{rep}$;
measuring with a sample detector a measurement signal from a superposition of the interrogator and local oscillator light beams after at least the interrogator light beam has traversed the sample space, the superposition causing heterodyne mixing at the sample detector to generate a third frequency comb having a third repetition frequency $\Delta f_{rep}$ equal to the difference between the first and second repetition frequencies; and
measuring with a frequency offset detector a frequency offset measurement signal derived from a portion of the interrogator light beam which has been overlapped with a delayed version of itself by splitting that portion of the interrogator light beam into first and second components and then recombining the first and second components after the first component has traversed a first optical path length and the second component has traversed a second optical path length that is longer than the first optical path length by an optical path length difference, wherein the frequency offset measurement signal is amplitude modulated such that a frequency change, $\delta v_{ofs}$ of the first frequency comb by an amount

$$\delta v_{\text{ofs}} = \frac{c}{\Delta L \cdot \mu}$$

causes the amplitude of the frequency offset measurement signal to be modulated by one cycle, where

$\Delta L$ is the optical path length difference,
$c$ is the speed of light, and
$\mu$ is the refractive index of the medium traversed by the first and second components.

8. The method of clause 7, further comprising:
adjusting the optical path length difference $\Delta L$ to a value at least approximately equal to $q \cdot c/(f_{rep} \cdot \mu)$, where c is the speed of light, $q$ is an integer, $\mu$ is the refractive index of the medium that the first and second components traverse, and $f_{rep}$ is the repetition frequency of the first frequency comb.

9. The method of clause 7 or 8, further comprising:

applying first and second control signals to the first and second comb sources, the first and second control signals having respective first and second functional forms that cause the first and second frequency combs to sweep repeatedly over first and second frequency tuning ranges; and
collecting a dataset of data points from the sample detector and the frequency offset detector as the first and second frequency combs are swept repeatedly over the first and second frequency tuning ranges.

10. The method of clause 9, further comprising:
adjusting the optical path length difference to a value that provides an observable amplitude modulation of the frequency offset measurement signal throughout the first frequency tuning range.

11. A method of computer processing data obtained from a dual-comb spectrometer in which an interrogator light beam containing a first frequency comb and a local oscillator light beam containing a second frequency comb are superimposed on a sample detector after at least the interrogator light beam has traversed a sample to cause heterodyne mixing and generate a third frequency comb, the method comprising:

inputting a sample dataset obtained from detecting the third frequency comb while performing a sweep of the first and second frequency combs multiple times over respective first and second frequency tuning ranges, each sweep being assigned a time index;

inputting a frequency calibration dataset which was obtained concurrently with the sample dataset, thereby to obtain a data calibration subset for each sweep, the frequency calibration dataset having been obtained by measuring with a frequency offset detector a frequency offset measurement signal derived from a portion of the interrogator light beam which has been overlapped with a delayed version of itself to generate an approximately sinusoidally modulated interference signal;

inputting the repetition frequency of the first frequency comb, $f_{rep}$;

processing the sample dataset to determine a beat note amplitude for each beat note at each time index; and

processing the frequency calibration dataset by:

fitting the data calibration subsets to determine a local period, $T(t)$, and a local phase, $0(t)$, for the approximately sinusoidally modulated interference signal;

computing frequency changes, $\delta v_{ofs}(t)$, of the first frequency comb from the local period and the local phase; and

determining a frequency offset value, $F_{tn}$, for each beat note, $n$, and for each time index, $t$, from the frequency changes, $\delta v_{ofs}(t)$, and the repetition frequency, $f_{rep}$, according to the formula

$$F_{tn} = \delta v_{\text{ofs}}(t) + n \cdot f_{\text{rep}}$$

so that each beat note amplitude obtained from the sample dataset is associated with a frequency offset value.

12. A computer program stored on a computer readable medium and loadable into the internal memory of a computing device comprising software code portions which when run on a computing device perform the method of clause 11.

13. A computer program product storing the computer program of clause 12.

**Claims**

1. A comb source apparatus comprising:

a comb source operable to output a light beam containing a frequency comb consisting of a finite series of comb lines separated by a repetition frequency $f_{rep}$;

an unbalanced interference device configured to receive a portion of the light beam, split that portion of the light beam into first and second components and then recombine the first and second components after the first component has traversed a first optical path length and the second component has traversed a second optical path length that is longer than the first optical path length by an optical path length difference, thereby to output a recombined beam portion; and

a frequency offset detector arranged to receive the recombined beam portion and operable to output a frequency offset measurement signal, which is amplitude modulated such that a frequency change, $\delta v_{ofs}$ , of the frequency comb by an amount

$$\delta v_{\text{ofs}} = \frac{c}{\Delta L \cdot \mu}$$

causes the amplitude of the frequency offset measurement signal to be modulated by one cycle, where

$\Delta L$ is the optical path length difference,

*c* is the speed of light, and

$\mu$ is the refractive index of the medium traversed by the first and second components.

2. The comb source apparatus of claim 1, wherein the unbalanced interference device is configured such that the optical path length difference $\Delta L$ is set to a value that at least approximately equals $q \cdot c/(f_{rep} \cdot \mu)$, where c is the speed of light, $q$ is an integer, $\mu$ is the refractive index of the medium traversed by the first and second components in the unbalanced interference device, and $f_{rep}$ is the repetition frequency of the frequency comb.

3. The comb source apparatus of claim 1 or 2, wherein the unbalanced interference device is configured such that the optical path length difference is set to a value that provides an observable amplitude modulation of the frequency offset measurement signal over a defined frequency range.

4. The comb source apparatus of any preceding claim, wherein the unbalanced interference device is configured to allow at least one of the first and second optical path lengths to be adjusted, thereby to adjust the optical path length difference.

5. The comb source apparatus of any preceding claim, wherein the unbalanced interference device is selected from the group: an interferometer; a Fabry-Perot etalon; and an optical resonator.

6. The comb source apparatus of any preceding claim, further comprising a data logger arranged to collect the frequency offset measurement signal.

7. The comb source apparatus of any preceding claim, further comprising a data processor operable to process the frequency offset measurement signal to track frequency changes of the frequency comb as a function of time through analysing the cycles in the frequency offset measurement signal.

8. The comb source apparatus of any preceding claim, further comprising:
   a controller configured to apply a control signal to the comb source, wherein varying magnitude of the control signal causes the frequency comb to move in frequency.

9. A method of operating a comb source apparatus comprising:

   outputting with a comb source a light beam containing a frequency comb consisting of a finite series of comb lines separated by a repetition frequency $f_{rep}$; and
   measuring with a frequency offset detector a frequency offset measurement signal derived from a portion of the light beam which has been overlapped with a delayed version of itself by splitting that portion of the light beam into first and second components and then recombining the first and second components after the first component has traversed a first optical path length and the second component has traversed a second optical path length that is longer than the first optical path length by an optical path length difference, wherein the frequency offset measurement signal is amplitude modulated such that a frequency change, $\delta\nu_{ofs}$, of the frequency comb by an amount

$$\delta\nu_{ofs} = \frac{c}{\Delta L \cdot \mu}$$

causes the amplitude of the frequency offset measurement signal to be modulated by one cycle, where

   $\Delta L$ is the optical path length difference,
   *c* is the speed of light, and
   $\mu$ is the refractive index of the medium traversed by the first and second components.

10. The method of claim 9, further comprising:
    adjusting the optical path length difference $\Delta L$ to a value at least approximately equal to $q \cdot c/(f_{rep} \cdot \mu)$, where c is the speed of light, $q$ is an integer, $\mu$ is the refractive index of the medium that the first and second components traverse, and $f_{rep}$ is the repetition frequency of the frequency comb.

**11.** The method of claim 9 or 10, further comprising:
adjusting the optical path length difference to a value that provides an observable amplitude modulation of the frequency offset measurement signal over a defined frequency range.

**12.** A method of computer processing data obtained from a comb source apparatus comprising:

a comb source operable to output a light beam containing a frequency comb consisting of a finite series of comb lines separated by a repetition frequency $f_{rep}$;
an unbalanced interference device configured to receive a portion of the light beam, split that portion of the light beam into first and second components and then recombine the first and second components after the first component has traversed a first optical path length and the second component has traversed a second optical path length that is longer than the first optical path length by an optical path length difference, thereby to output a recombined beam portion; and
a frequency offset detector arranged to receive the recombined beam portion and operable to output a frequency offset measurement signal, which is amplitude modulated such that a frequency change, $\delta v_{ofs}$, of the frequency comb by an amount

$$\delta v_{ofs} = \frac{c}{\Delta L \cdot \mu}$$

causes the amplitude of the frequency offset measurement signal to be modulated by one cycle, where

$\Delta L$ is the optical path length difference,
$c$ is the speed of light, and
$\mu$ is the refractive index of the medium traversed by the first and second components, the computer processing method comprising:

receiving a dataset comprising the frequency offset measurement signal collected over a time period; and
analysing the cycles in the frequency offset measurement signal to determine how the frequency comb changes frequency through the time period.

**13.** A dual-comb spectrometer comprising:

a comb source apparatus according to any of claims 1 to 8, whose light beam acts as an interrogator light beam in the dual-comb spectrometer;
a further comb source operable to output a local oscillator light beam containing a further frequency comb consisting of a finite series of further comb lines separated by a further repetition frequency $f_{rep} + \Delta f_{rep}$; and
a sample detector operable to output a sample measurement signal and arranged to receive a superposition of the interrogator and local oscillator light beams after at least the interrogator light beam has traversed a sample space, the superposition causing heterodyne mixing at the sample detector to generate a third frequency comb having a still further repetition frequency $\Delta f_{rep}$ equal to the difference between said repetition frequency and said further repetition frequency.

**14.** A method of operating a dual-comb spectrometer comprising:

operating a comb source apparatus according to any of claims 9 to 11, whose light beam acts as an interrogator light beam in the dual-comb spectrometer;
providing a sample in a sample space;
outputting with a second comb source a local oscillator light beam containing a further frequency comb consisting of a finite series of further comb lines separated by a second repetition frequency $f_{rep} + \Delta f_{rep}$; and
measuring with a sample detector a measurement signal from a superposition of the interrogator and local oscillator light beams after at least the interrogator light beam has traversed the sample space, the superposition causing heterodyne mixing at the sample detector to generate a still further frequency comb having a still further repetition frequency $\Delta f_{rep}$ equal to the difference between said repetition frequency and said further repetition frequency.

15. A method of computer processing data obtained from a dual-comb spectrometer in which an interrogator light beam containing a first frequency comb and a local oscillator light beam containing a second frequency comb are superimposed on a sample detector after at least the interrogator light beam has traversed a sample to cause heterodyne mixing and generate a third frequency comb, the method comprising:

inputting a sample dataset obtained from detecting the third frequency comb while performing a sweep of the first and second frequency combs multiple times over respective first and second frequency tuning ranges, each sweep being assigned a time index;

inputting a frequency calibration dataset which was obtained concurrently with the sample dataset, thereby to obtain a data calibration subset for each sweep, the frequency calibration dataset having been obtained by measuring with a frequency offset detector a frequency offset measurement signal derived from a portion of the interrogator light beam which has been overlapped with a delayed version of itself to generate an approximately sinusoidally modulated interference signal;

inputting the repetition frequency of the first frequency comb, $f_{rep}$;

processing the sample dataset to determine a beat note amplitude for each beat note at each time index; and processing the frequency calibration dataset by:

fitting the data calibration subsets to determine a local period, $T(t)$, and a local phase, $\theta(t)$, for the approximately sinusoidally modulated interference signal;

computing frequency changes, $\delta\nu_{ofs}(t)$, of the first frequency comb from the local period and the local phase; and

determining a frequency offset value, $F_{tn}$, for each beat note, $n$, and for each time index, $t$, from the frequency changes, $\delta\nu_{ofs}(t)$, and the repetition frequency, $f_{rep}$, according to the formula

$$F_{tn} = \delta\nu_{ofs}(t) + n \cdot f_{rep}$$

so that each beat note amplitude obtained from the sample dataset is associated with a frequency offset value.

FIG. 1A

$$\Delta L = L_2 - L_1$$

$$\Delta\tau = \tau_2 - \tau_1$$

FIG. 1B

$$\nu_{-1} \quad \nu_{ofs} \quad \nu_{+1} \quad \nu_{+2}$$

$$\nu$$

$$f_{\mathrm{rep}}$$

FIG. 2

FIG. 3A

$$\Delta L = L_2 - L_1$$

$$\Delta\tau = \tau_2 - \tau_1$$

FIG. 3B

$$L_1$$

$$\nu_1, \nu_2, \nu_3$$

FIG. 4A

$$L_2$$

$$\Delta L = L_2 - L_1$$

$$\Delta \tau = \tau_2 - \tau_1$$

D

$$\frac{c}{\Delta L}$$

P

FIG. 4B

$$\Sigma \nu_N$$

$$\nu_1$$

$$\nu_2$$

$$\nu_3$$

$$\delta \nu$$

$$\Delta L = L_2 - L_1$$

$$\Delta\tau = \tau_2 - \tau_1$$

FIG. 5

FIG. 6A

FIG. 6B

FIG. 7

FIG. 8

FIG. 9

FIG. 10

FIG. 11

FIG. 12

EUROPEAN SEARCH REPORT

Application Number

EP 21 18 6382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2014 209517 A (MITUTOYO CORP) 6 November 2014 (2014-11-06) | 1-12 | INV. G01J3/433 |
| Y | * abstract; figure 3 * | 13,14 | G01J3/10 |
| A | * paragraphs [0001], [0025], [0029], [0030] * | 15 | |
| X,D | US 2017/201328 A1 (HUGI ANDREAS [CH] ET AL) 13 July 2017 (2017-07-13) | 15 | |
| Y | * figures 3,22 * | 13,14 | |
| A | * paragraphs [0056], [0059], [0108], [0109] * | 1-12 | |
| A | Kayes Imrul: "Frequency Combs for Spectroscopy and Optical Metrology", , 2 January 2019 (2019-01-02), pages 1-132, XP055879469, ISBN: 979-8--59704731-7 Retrieved from the Internet: URL:https://escholarship.mcgill.ca/concern/theses/mg74qr47x [retrieved on 2022-01-14] * abstract * * page 65 - page 105 * | 1-15 | |
| A | SAMOUDI BOUSSELHAM: "Realisation of the metre by using a femtosecond laser frequency comb: applications in optical frequency metrology", INTERNATIONAL JOURNAL OF METROLOGY AND QUALITY ENGINEERING, vol. 8, 2 January 2017 (2017-01-02), page 16, XP055882224, DOI: 10.1051/ijmqe/2017008 [retrieved on 2022-01-24] * abstract; figure 1 * * page 3, left-hand column, paragraph 1 - page 4, left-hand column, paragraph 2 * | 1-15 | |

TECHNICAL FIELDS SEARCHED (IPC)

G01J

-/--

The present search report has been drawn up for all claims

| Place of search | Date of completion of the search | Examiner |
|---|---|---|
| Munich | 25 January 2022 | Gangl, Martin |

EPO FORM 1503 03.82 (P04C01)

**page 1 of 2**

| | Europäisches Patentamt European Patent Office Office européen des brevets | EUROPEAN SEARCH REPORT | Application Number EP 21 18 6382 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | GIANELLA MICHELE ET AL: "Frequency axis for swept dual-comb spectroscopy with quantum cascade lasers", OPTICS LETTERS, 20 December 2021 (2021-12-20), XP055880988, US ISSN: 0146-9592, DOI: 10.1364/OL.446347 * abstract; figures 1-3 * * page 2, left-hand column, paragraph 3 - page 4, left-hand column, paragraph 4 * ----- | 1-15 | |

|  |  | TECHNICAL FIELDS SEARCHED (IPC) |
|---|---|---|

The present search report has been drawn up for all claims

| Place of search | Date of completion of the search | Examiner |
|---|---|---|
| Munich | 25 January 2022 | Gangl, Martin |

page 2 of 2

## ANNEX TO THE EUROPEAN SEARCH REPORT
## ON EUROPEAN PATENT APPLICATION NO.

**EP 21 18 6382**

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2022

| Patent document cited in search report | | Publication date | Patent family member(s) | | Publication date |
|---|---|---|---|---|---|
| JP 2014209517 | A | 06-11-2014 | JP | 6254356 B2 | 27-12-2017 |
| | | | JP | 2014209517 A | 06-11-2014 |
| US 2017201328 | A1 | 13-07-2017 | EP | 3155384 A1 | 19-04-2017 |
| | | | US | 2017201328 A1 | 13-07-2017 |
| | | | WO | 2015193282 A1 | 23-12-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017201328 A1

- US 2021063306 A1

**Non-patent literature cited in the description**

- **M. GIANELLA et al.** High-resolution and gapless dual comb spectroscopy with current-tuned quantum cascade lasers. *Opt. Express,* 2020, vol. 28, 6197-6208

- **FORTIER, T. ; BAUMANN, E.** 20 years of developments in optical frequency comb technology and applications. *Commun Phys,* 2019, vol. 2, 153, https://doi.org/10.1038/s42005-019-0249-y